Europäisches Patentamt

European Patent Office

Office européen des brevets

(11) Publication number: **0 308 240 B1**

(12) **EUROPEAN PATENT SPECIFICATION**

(45) Date of publication of patent specification: **17.06.92**  (51) Int. Cl.⁵: **C03C 25/02**, C04B 14/44

(21) Application number: **88308581.3**

(22) Date of filing: **16.09.88**

(54) **Glass fiber composite.**

(30) Priority: **17.09.87 US 97699**

(43) Date of publication of application:
**22.03.89 Bulletin 89/12**

(45) Publication of the grant of the patent:
**17.06.92 Bulletin 92/25**

(84) Designated Contracting States:
**DE FR GB IT NL**

(56) References cited:
**US-A- 3 513 049
US-A- 3 642 728
US-A- 3 870 841
US-A- 4 543 385**

(73) Proprietor: **EXXON RESEARCH AND ENGINEERING COMPANY
P.O.Box 390, 180 Park Avenue
Florham Park, New Jersey 07932(US)**

(72) Inventor: **Rerup, Hans J.
22 Homewood Avenue
Hamilton Ontario, L8P 2M2(CA)**
Inventor: **Duvdevani, Ilan
559 Nordhoff Drive
Leonia New Jersey 07605(US)**
Inventor: **Drake, Evelyn Nobles
RD 1, Moutain Road
Lebanon New Jersey 08833(US)**

(74) Representative: **Fletcher Watts, Susan J. et al
ESSO Engineering (Europe) Ltd. Patents & Licences Mailpoint 72 Esso House Ermyn Way
Leatherhead, Surrey KT22 8XE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a glass fiber composite containing an elastomeric coating, wherein the elastomeric coating is formed from an organic solution of an organic liquid and an interpolymer complex of a cationic polymer and an anionic polymer. The invention also relates to a cement composition incorporating the composite material.

Accordingly in one aspect the present invention provides a composite comprising:

(a) a plurality of glass fibers; and

(b) a polymeric coating adhered at least partially to the outer layer of glass filaments arranged in bundles, said coating having a thickness of 0.1 to 100 micrometers; the polymeric coating comprising an interpolymeric complex of a neutralized sulfonated polymer having a sulfonate content of 4 to 200 milliequivalents per 100 grams of the neutralized sulfonated polymer and a nitrogen-containing polymer containing basic groups selected from pyridines, anilines, pyrroles, amides and other basic polymerizable ammonia derivatives, and having a basic nitrogen content of from 4 to 500 milliequivalents per 100g of the nitrogen-containing polymer.

In a second aspect the invention provides a cement composition comprising:

(a) a plurality of glass fibers; and

(b) a polymeric coating adhered at least partially to the outer layer of glass filaments arranged in bundles, said coating having a thickness of 0.1 to 100 micrometers; said polymeric comprising an interpolymeric complex of a neutralized sulfonated polymer having a sulfonate content of 4 to 200 milliequivalents per 100 grams of the neutralized sulfonated polymer and a nitrogen-containing polymer coontaining basic groups selected from pyridines, anilines, pyrroles, amides and other basic polymerizable ammonia derivatives, and having a basic nitrogen content of from 4 to 500 milliequivalents per 100g of the nitrogen-containing polymer.

The component materials for forming the elastomeric coating generally include a water insoluble interpolymer complex dissolved in an organic solvent system to form a solution with a concentration level of 0.1 to 20 weight percent. The solvent system comprises an organic solvent with or without a polar cosolvent, such as alcohol or amine. The solvent can be an organic liquid which is capable of dissolving the polymeric backbone. A cosolvent may be needed to break up associated domains resulting from aggregation of ionic species.

In general, the interpolymer complex is formed from the interaction in solution of a water insoluble anionic sulfonated polymer and a cationic copolymer, such as styrene/vinyl pyridine copolymer. The water insoluble anionic sulfonated polymer will comprise from 4 to 200 milliequivalents of pendant sulfonate groups per 100 grams of polymer, more preferably from 10 to 100 meq. pendant sulfonate groups. In most instances, the sulfonates utilized in the instant invention are acids or are neutralized with transition elements selected from Groups IVA, VA, VIA, VIIA, VIIIA, IB and IIB of the Periodic Table of Elements and lead, tin and antimony, as well as ammonium and amine counterions. Sulfonated polymers which are subject to the process of the instant invention are illimitable and include both plastic and elastic polymers. Specific polymers include sulfonated polystyrene, sulfonated t-butyl styrene, sulfonated ethylene copolymers, sulfonated atactic propylene polymers and propylene copolymers, sulfonated styrene/acrylonitrile copolymers, sulfonated styrene/methyl methacrylate copolymers, sulfonated block copolymers of styrene/ethylene oxide, sulfonated copolymers of acrylic acid copolymers with styrene, sulfonated polyisobutylene, sulfonated ethylene-propylene terpolymers, sulfonated polyisoprene copolymers (Butyl rubber), and sulfonated elastomers and their copolymers. The preferred sulfonated polymers of the instant invention are ethylene-propylene terpolymers Butyl rubber and polystyrene, wherein the ethylene-propylene terpolymers and polystyrene are most preferred.

Neutralization of the cited polymers with appropriate metal hydroxides, metal acetates, metal oxides, or ammonium hydroxide, etc. can be conducted by means well known in the art. For examples, the sulfonatation process as with Butyl rubber, containing a small 0.3 to 1.0 mole percent unsaturation, can conducted in a suitable solvent, such as toluene, with acetyle sulfate as the sulfonated agent, such as described in U.S. Patent No. 3,836,511. The resulting sulfonic acid derivative can then be neutralized with a number of different neutralization agents, such as sodium phenolate and similar metal salts. The amounts of such neutralization agents employed will normally be stoichiometrically to the amount of free acid in the polymer, plus an unreacted reagent which is still present. It is preferred that the amount of neutralizing agent be equal to the molar amount of sulfonating agent originally employed plus 10 percent more to ensure full neutralization. The use of an excess of such neutralization agent is necessary to effect at least 50 percent neutralization of the sulfonic acid groups present in the polymer, preferably at least 90 percent, and most preferably essentially complete neutralization of such acid groups should be effected.

EP 0 308 240 B1

Thus, the degree of neutralization of said sulfonate groups may vary from 0 (free acid form) to greater than 100 mole percent, preferably 50 to 100 mole percent. With the utilization of neutralized sulfonates in this instant invention, it is preferred that the degree of neutralization by substantially complete, that is, with no substantial free acid present and without substantial excess of the base, other than that needed to ensure neutralization. The neutralized sulfonates possess greater thermal stability compared to their acid form. Thus, it is clear that the polymers which are normally utilized in the instant invention comprise substantially neutralized pendant groups and, in fact, an excess of the neutralizing material may be utilized without defeating the objects of the instant invention.

The sulfonated polymers of the instant invention may be neutralized prior to incorporation into the organic solvent, or by neutralization of the acid form in situ. For example, preferably the acid derivative is neutralized immediately after preparation. For example, if the sulfonation of polystyrene is conducted in solution, then the neutralization of that acid derivative can be conducted immediately following the sulfonation procedure. The neutralized polymer may then be isolated by means well known to those skilled in the art, i.e., coagulation, steam stripping or solvent evaporation, because the neutralized polymer has sufficient thermal stability to be dried for employment at a later time in the process of the instant invention. It is well known that the unneutralized sulfonic acid derivatives do not possess good thermal stability and the above operations avoid that problem.

It is also possible to neutralize the acid form of these polymers in situ; however, this is not a preferred operation since in situ neutralization requires preparation of the sulfonic acid in the organic liquid which is to be subjected to the instant process, or the acid form of the sulfonated polymer must be dissolved in said organic liquid. The latter approach may involve handling of an acid form of an ionic polymer which has limited thermal stability. Therefore, it is quite apparent that the preparation and isolation of a neutralized sulfonated polymer affords the maximum latitude in formulation, less problems in handling polymers of limited thermal stability and maximum control over the final mixture of sulfonated polymer, polar cosolvent and organic liquid.

The sulfonated polymers of the instant invention may vary in number average molecular weight from 1,000 to 10,000,000, preferably 5,000 to 1,000,000, most preferably from 10,000 to 600,000. These polymers may be prepared by methods known in the art, for example, see U.S. Patent No. 3,642,728.

The preferred sulfonated polymers for use in the instant invention, e.g., sulfonated ethylene propylene terpolymers, sulfonated polystyrene and substituted derivatives thereof, may be prepared by the procedures described in U.S. Patent No. 3,870,841, filed October 2, 1972 in the names of H. S. Makowski, R. D. Lundberg and G. H. Singhal.

The water insoluble nitrogen-containing copolymer will comprise from 0.5 to 50 mole percent basic groups situated along the chain backbone or, alternatively, the basic groups content will range from 4 meq. to 500 meq. per 100 grams of polymer. The basic groups are selected from pyridines, anilines, pyrroles, amides and other basic polymerizable ammonia derivatives. Specific polymers include styrene-4-vinyl-pyridine, styrene-2-vinylpyridine, t-Butyl styrene-4-vinylpyridine, ethylene-4-vinylpyridine copolymers, propylene-4-vinylpyridine copolymers, acrylonitrile-4-vinylpyridine, methyl methacrylate-4-vinyl pyridine copolymers, block copolymers and ethylene oxide/ 4-vinylpyridine, acrylic acid-4-vinylpyridine copolymers, ethylene-propylene-4-vinyl-pyridine terpolymers, isoprene-4-vinylpyridine, 4-vinylpyridine-elastomers copolymers and the like. The preferred nitrogen-containing polymers of the instant invention are styrene and 4-vinylpyridine and ethylene-propylene terpolymers with grafted 4-vinylpyridine. The former polymers are the most preferred species.

These materials are prepared through conventional solution, suspension and emulsion copolymerization techniques.

The copolymer of styrene/vinyl pyridine is typically formed by the emulsion copolymerization of freshly distilled styrene and vinylpyridine monomers. This method of copolymerization is generally known to those well versed in the art. As noted previously, solution of suspension techniques may also be used to prepare those base-containing polymeric materials.

The interpolymer complex of the neutralized sulfonated polymer and the copolymer of styrene/vinyl pyridine is formed by forming a first solution of the neutralized sulfonated polymer in the previously described solvent system. A second solution of the copolymer of styrene/vinyl pyridine is formed by dissolving the copolymer of styrene/vinyl pyridine in an aromatic solvent, such as xylene or benzene. The concentration of the neutralized sulfonated polymer in the first solution is 0.1 to 20 weight percent, more preferably 0.5 to 10, and most preferably 0.5 to 6.0. The concentration of the copolymer of styrene/vinylpyridine in the second solution is 0.1 to 20 weight percent, more preferably about 0.5 to about 10 and most preferably 0.5 to 6.0. The first solution of the neutralized sulfonated polymer and the second solution of the copolymer of styrene/vinyl-pyridine are mixed together, thereby permitting the interaction of

3

the neutralized sulfonated polymer and the copolymer of styrene/vinylpyridine to form the water insoluble interpolymer complex. Alternatively, both polymers can be dissolved simultaneously in the same solvent system. The molar ratio of sulfonate groups in the neutralized sulfonated polymer to nitrogen in the copolymer of styrene/vinylpyridine in the interpolymer complex is 0.1 to 20, more preferably 0.5 to 10, and most preferably 1 to 5. The concentration of the interpolymer complex in the organic liquid is 0.1 to 20 weight percent, more preferably 0.1 to 10, and most preferably 0.5 to 6.

We have surprisingly found that a very important factor in determining the strength of the interaction between the amine-containing polymer and the sulfonate-containing polymer is the nature of the counterion. There are, broadly speaking, three major classes of such counterions. The first class, which are less preferred, are those metals of Group IA and Group IIA, and which include Li, Na, K, etc., Be, Mg, Ca, etc. We have found that these species do not interact as strongly with amine groups as the more preferred species described below. Those metals are commonly defined as members of the transition elements (see chemical text: Chemical Principles and Properties, by M. J. Sienko and R. A. Plane, McGraw Hill Book Co., 1974, page 19). These metal cations are best exemplified by zinc and interact strongly with pyridine and similar amines. As a consequence, a zinc neutralized sulfonated polymer interacts much more strongly with a styrene/vinylpyridine copolymer than does a magnesium or sodium neutralized system. It is for this reason that the transition elements are preferred, with zinc, copper, iron, nickel and cobalt being especially preferred. We also include antimony and lead a suitable cations.

A third species which is preferred is the free acid of the sulfonated polymer, which will also interact with amine-containing polymers. In this latter case, it is clear that the interaction is a classic acid-base interaction, while with the transition metals a true coordination complex is created, which is due to the donation of the electron pair of the nitrogen element. This distinction if a very important one and sets these complexes apart from classic acid-base interactions. The surprising observation is that such coordination complexes can form in such extreme dilution insofar as interacting groups are concerned and that they are apparently formed so far removed from their expected stoichiometry (based on small molecule analogs).

As discussed above, a variety of polymer backbones will display the desirable properties discovered in this invention and are summarized as follows:

| Sulfonate Polymer | Amine Polymer |
|---|---|
| o Sulfo-EPDM | o Styrene/Vinylpyridine Copolymer |
| o Sulfonate Isoprene Copolymers | |
| o Sulfonate SBR Polymers | o Vinylpyridine/ Styrene/Butadiene Terpolymers |
| o Sulfonate Butadiene Polymers | |
| o Sulfonated Butyl | |
| o Sulfonated Acrylate and Methacrylate Copolymers | o Isoprene/Vinyl Pyridine Copolymer |
| o Sulfonated Block Polymers | o Ethylacrylate/Vinyl-pyridine Copolymer and Alkyl Acrylate Copolymers with Vinyl Pyridine where the Alkyl group varies in carbon number from 1 to 18 |
| | o Methyl Methacrylate/-Vinyl Pyridine Copolymer and Alkyl Methacryl-late copolymers with Vinylpyridine wherein |

the number of carbon groups in the alkyl group varies from 1 to 18 carbon atoms

o Butadiene/Vinylpyridine Copolymer

o Propylene/Vinylpyridine Block Copolymer

o Ethylene/Vinylpyridine Block Copolymer

o t-Butyl Styrene/Vinylpyridine Copolymers

o Vinylpyridine Copolymers with alpha-beta ethylenically unsaturated copolymers or terpolymers

The amount of vinylpyridine in the amine-containing polymer can vary widely, but should range from less than 50 mole percent down to at least 0.5 mole percent. A minimum of two basic groups must be present on the average per polymer molecule in order to create networks and the basic nitrogen content generally will range from 4 meq. per 100 grams of polymer up to 500 meq. per 100 grams. A range of 8 to 200 meq. per 100 grams is preferred.

Preferably, the amine content in the basic polymer is expressed in terms of basic nitrogen. In this respect, the nitrogen content in amides and similar non-basic nitrogen functionality is not part of the interacting species.

The organic liquids which may be utilized in the instant invention are selected with relation to the ionic polymer and vice-versa. The organic liquid is selected from the group consisting of aromatic hydrocarbons, aliphatic hydrocarbons, cyclic aliphatic ethers, aliphatic ethers or organic aliphatic esters and mixtures thereof.

Specific examples of organic liquids to be employed with the various types of polymers are:

| Polymer | Organic Liquid |
|---|---|
| sulfonated polystyrene | benzene, toluene, ethyl benzene, methylethyl ketone, xylene, styrene, ethylendichloride, methylene chloride. |
| sulfonated poly-t-butyl-styrene | benzene, toluene, xylene, ethyl benzene, styrene, t-butyl styrene, aliphatic oils, aromatic oils, hexane, heptane, decane, nonane. |
| sulfonated ethylene-propylene terpolymer | pentane, aliphatic and aromatic solvent oils, such as Solvent "100 Neutral", "150 Neutral" |

|  | and similar oils, benzene, diesel oil, toluene, xylene, ethyl benzene, pentane, hexane, heptane, octane, isooctane, nonane decane aromatic solvents, ketone solvents. |
| --- | --- |
| sulfonated styrene-methyl methacrylate copolymer | dioxane, halogenated aliphatics, e.g., methylene chloride, tetrahydrofuran. |
| sulfonated polyisobutylene | saturated aliphatic hydrocarbons, diisobuty-lene, triisobutylene, aromatic and alkyl sub-stituted aromatic hydro-carbons, chlorinated hydrocarbons, n-butyl ether, n-amyl ether, methyl oleate, aliphatic oils, oils predominantly paraffinic in nature and mixtures containing naphthenic hydrocarbons. "Solvent 100 Neutral", "Solvent 150 Neutral" and all related oils, low molecular weight polymeric oils such as squalene, white oils and process oils having 60 percent or less aromatic content. |

8

```
sulfonated polyvinyl          toluene, benzene,
toluene                       xylene, cyclohexane,
                              ethyl benzene, styrene,
                              methylene chloride,
                              ethylene dichloride.
```

In order to reduce the viscosity of organic solution of the interpolymer complex to be able to employ the organic solution in a casting process, a polar cosolvent may be added to the organic solution of the interpolymer complex to solubilize the pendant ionomeric groups. The polar cosolvent will have a solubility parameter of at least 10.0, more preferably at least 11.0, and is water miscible and may comprise from 0.1 to 15.0 weight percent, preferably 0.1 to 5.0 weight percent, of the total mixture of organic liquid, water insoluble ionomeric polymer and polar cosolvent.

Normally, the polar cosolvent will be a liquid at room temperature, however, this is not a requirement. It is preferred, but not required, that the polar cosolvent be soluble or miscible with the organic liquid at the levels employed in this invention. The polar cosolvent is selected from the group consisting essentially of water soluble alcohols, amines, di- or tri-functional alcohols, amides, acetamides, phosphates, or lactones and mixtures thereof. Especially preferred polar cosolvents are aliphatic alcohols, such as methanol, ethanol, n-propanol, isopropanol, 1,2-propane diol, monoethyl ether of ethylene glycol and n-ethylformamide.

The elastomeric coating of the glass fibers is done by applying the organic solution of the interpolymer complex over the substance at an ambient temperature or at 10-50°C, by either dip-coating or spray-coating or with the use of other techniques for thin spreading (such as brushing). The organic solvent system is then permitted to evaporate with or without the aid of forced drying gas, such as air or nitrogen gas. This step is called the drying process. The drying gas temperature can be from ambient temperature up to the boiling point of the organic solvent system. Preferably the temperature of the drying gas is between 20°C to 100°C. The most preferred temperature of the drying gas should be 70°C for fast evaporation of the organic solvent system. After drying the thickness of the applied coating should be 0.1 micrometer to 100 micrometers, most preferably 0.2 to 20 micrometes. Multiple layers of polymers can be applied where the ion containing elastomeric component is at any of the layers but preferably in the layer closest to the glass fibers to provide the defect free thin skin over the glass fiber strand. Most preferred, the coating thickness should be 0.2 to 20 micrometers for both performance and economic reasons. To control the thickness of the applied coating, the solution concentration of the interpolymeric complex is applied at 0.5 to 6 weight percent. Most preferably, the concentration should be 5 weight percent. The coating solution of the interpolymeric complex can be applied in single or multiple layers, depending on the desired coating thickness. In any instance, the organic solvent system is evaporated after each layer application.

The glass fiber strands or glass rovings used in the instant invention are based on any known glass compositions such as boro-silicates but preferably glass fibers of the alkali resistant type commonly known as AR glass. The fibers may or may not be sized (individually coated with coatings known in the art for improved handling and performance). The strands or bundles of glass fibers used in the instant invention contain 2 to 2000 fibers, most preferably 50 to 800 individual fibers where the diameter of the individual fibers range from 1 to 50 micrometers, preferably 5 to 20 micrometers per fiber. The fiber strands can be continuous or chopped. Chopped strands are normally in the 1 to 100 millimeter length, more preferably 6 to 60 millimeter long.

The elastomeric coated fibers of the instant invention are incorporated into cement in order to reinforce the cement thereby increasing the tensile properties and ductility of the cement composites.

The cementitious matrix formulation may contain any cement formulation known in the art including cement, Portland cement, concrete, mortar, gypsum and hydrous calcium silicate. The concentration of coated glass fiber strands is 0.1 to 60 wt.% of total composite weight. The fibers may be placed randomly in the composite or they may be oriented in prescribed patterns. They may be continous or chopped.

The following Examples will demonstrate the performance of an interpolymer complex consisting of a sulfonated polystyrene and a styrene-4-vinylpyridine.

Example 1

Preparation of Sulfonated EPDM

A sulfonated EPDM terpolymer (TP-320) is prepared by sulfonating a 40 Mooney viscosity at 100°C EPDM terpolymer (Royelane 521-Uniroyal) which has about 50 weight percent ethylene, about 5 weight percent ENB, with acetyl sulfate and neutralizing with $Zn(Ac)_2$ according to the procedure of U.S. Patent No. 3,836,511, herein incorporated by reference, thereby producing 25 meq. of zinc sulfonate groups per 100 grams of the EPDM polymer.

Example 2

Preparation of Styrene-4-Vinyl Pyridine Copolymer

A copolymer of styrene-4-vinyl pyridine was prepared via a free radical emulsion copolymerization process. The preparation was conducted as follows:
In a suitable, stirred reaction vessel under a nitrogen blanket the following ingredients were charged:
120 ml. distilled water
50 g. styrene
3.2 g. sodium lauryl sulfate
0.1 g. dodecylthiol
0.2 g. potassium persulfate
4.7 g. 4-vinyl pyridine
The polymerization was conducted at 50°C for 24 hours and the resultant emulsion was fluid and uniform. Three ml. of methanol containing .1% of hydroquinone was added as an inhibitor and the reaction mixture was precipitated in a large excess of acetone. The precipitate was filtered, then suspended in methanol and blended in a Waring blender to finally disperse any coagulated polymer. The suspension was filtered and dried in a vacuum oven at 60°C for 24 hours.
The resulting product represented 80% conversion of the reactive monomers and contained 1.68% nitrogen corresponding to 12.5 mole percent 4-vinyl pyridine incorporation.

Example 3

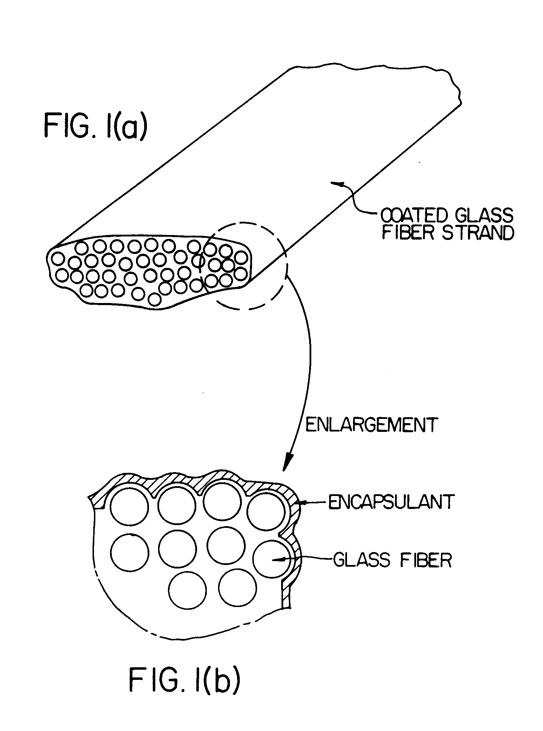

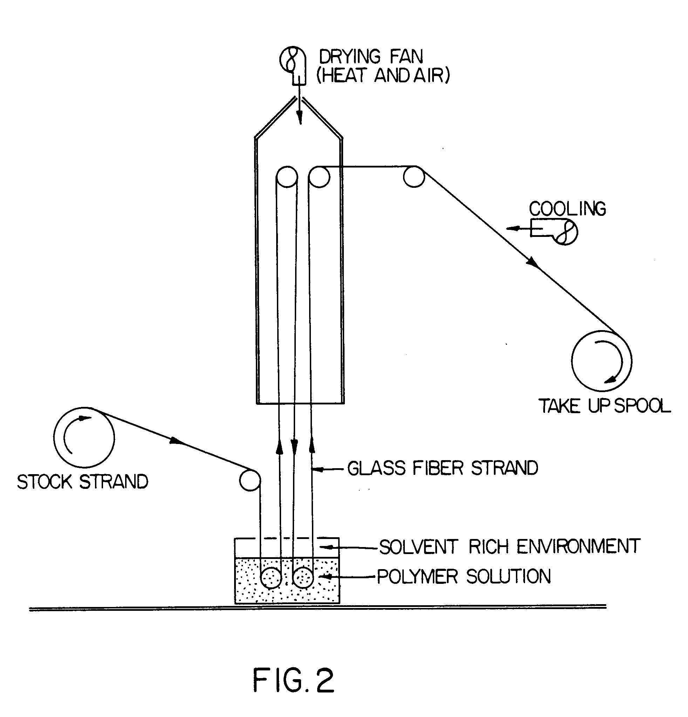

A solution (PC-22) of two polymers capable of complexing with each other was prepared in a mixed solvent as follows:
A solvent system was made up by mixing 93 parts of weight of toluene, 5 parts of isopropanol and 2 parts of methanol. Two solutions were prepared containing a single polymer each at a concentration of 2.5 wt.% each by dissolving in the above solvent system using a magnetic stirrer at room temperature. The polymers were a zinc salt of sulfo-EPDM and a copolymer of styrene and 4 vinyl-pyridine (SVP-706C). The two individual solutions were mixed together at equal weights each to yield a solution at 2.5 wt.% concentration containing equal amounts of each of the two polymers.
The sulfonated EPDM was based on an EPDM containing 55 wt.% ethylene, 40 wt.% propylene and 5 wt.% ethylidine-norbornene (ENB). The weight average molelcular weight of the EPDM terpolymer was about 90,000. It was sulfonated to 20 milliquivalents of sulfonate groups per 100 grams of EPDM, by an acetylsulfate reagent as described in U.S. patent 3,836,511. It was neutralized by a zinc counter ion using 43 milliequivalent per 100 gram EPDM of zinc acetate.
The SVP copolymer contained about 8 mole % of 4 vinyl-pyridine and had an intrinsic viscosity of about 2.9 in xylene at 25°C. It was prepared by an emulsion polymerization method.
The solutions of the mixed polymers (PC-22) had a viscosity of 106 cP at 25°C at a shear rate of 300 1/sec. as measured on a Haake CV-100 viscometer. The solution thickened up to a very high viscosity which could not be measured upon a slight evaporation of the solvent system.
A coating apparatus was assembled which facilitated the continuous coating of a single, 200 fillament, strand of commercially available CemFil II AR glass. See Fig. 2.
The glass strand was dipped in the polymer solution of Example 1 by drawing the strand under and around a pulley submerged in the polymer solution. As the strand emerged from the polymer solution it carried with it a uniform deposit of polymer solution. The draw rate was approximately 0.91 m per minute (3 feet per minute). Immediately as the solution laden strand left the solvent rich environment above the polymer solution bath, slight evaporation of the solvent system caused rapid gelling of the polymer solution on the strand.
The strand, with the coating of gelled polymer, continued upward into a drying chamber where the remainder of the solvent system was driven off in approximately one minute. Air, at approximately 65°C, was forced downward through the drying chamber to enhance solvent removal. Subsequently, the dipping and drying procedure was repeated to achieve an average polymer film thickness of approximately 5 micrometers: Following the second dry stage, the coated strand was cooled to room temperature and wound onto a pickup spool. The resulting polymer film on the surface of the glass fiber strand is illustrated in Fig. 1. The thickness and integrity of the polymer coating was verified by SEM (Scanning Electron Microscope).

It is important to note that the polymer film only penetrates the circumferance of the strand slightly making contact and adhering only to the outer layer of fillaments of the strand. The internal space between individual glass fibers remains void after the encapsulation process is completed.

Example 4

Cement Composite and Properties

(a) - Preparation of GFRC Composite

GFRC composite specimens for testing in bending were prepared using a conventional cement mortar mix and commercial CemFil II AR glass. 305 mm (12") long by 330 mm (13") wide by 9.5 mm (3/8") thick plates were fabricated in a horizontal mold and subsequently cut into twelve 25.4 mm (1") wide by 305 mm (12") long strips. One plate was fabricated with glass strands coated in accordance with example 2 above and another plate was fabricated with uncoated glass strands for comparison with the known art. Both GFRC composite plates were prepared, cured and aged in identical manner.

The mortar mix consisted of 100 units by wt. of type I Portland cement, 100 units of type #55 silica sand, 2 units of Daxad 19 plasticizer and 35 units of distilled water. Mixing was carried out in a high shear blender.

The glass fiber strands were assembled into mats of parallel strands, spaced 3.2 mm (1/8") apart. The ends of the individual strands were held aligned between two strips of adhesive tape. Six such mats were prepared for each test plate, providing a level of reinforcing equal to 0.82 wt.% of the composite.

The plates were prepared by first spreading a 3.2 mm (1/8") layer of mortar in the bottom of the mold. Six layers of glass mats were rolled into the mortar, one at a time, using a conventional grooved roller known in the art. This assured that all the glass reinforcing was concentrated at 1.6 mm (1/16") from the bottom face of the specimen. The mold was subsequently topped off with mortar, levelled and stored for one day in a sealed polyethelene bag at room temperature.

On the second day the GFRC plates were wet cut, parallel to the glass strand direction, into 25.4 mm (1") wide strips. The twelve strips were re-sealed in polyethylene bags with a small wad of moist paper towel for curing until age 14 days.

At age 14 days the 12 strips were divided into two equal lots. One set of six strips was maintained dry in the laboratory at 20°C, while the other six specimens were submerged in 60°C water. Submersion in 60°C water is well known and accepted in the art to simulated accelerated aging conditions. 50 days in 60°C water will cause total embrittlement of GFRC composites of current design formulations and represents approximately 30 years in real life weather conditions in the United Kingdom for example.

(b) - Testing

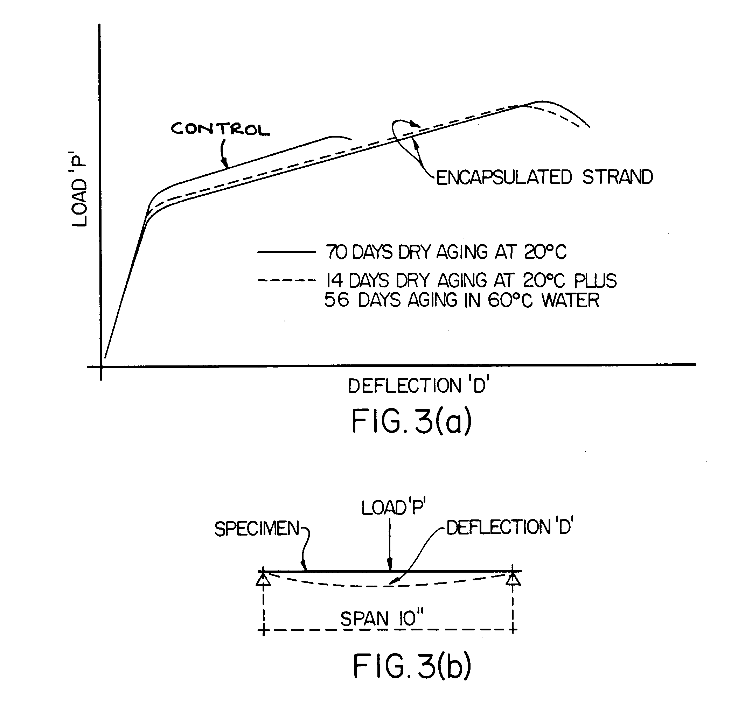

The specimens were tested in flexure using an Instron testing machine as indicated in Fig. 3 (b). The load 'P' and the deflection 'D' were continuously recorded. The deflection rate at the load point was maintained at 0.50 mm per minute to failure. The wet cured speciments were tested in a surface dry condition while the dry cured specimens were tested dry. All tests were carried out with the specimen temperature at 20°C.

(c) - Test Results

GFRC composites tested in bending provide results for easy interpolation of changes in properties due to aging. Results are consistant and effects produced by aging are quickly apparent.

Load-deflection curves for the bending tests described above are presented in Fig. 3 (a). For comparison, the results of both types of specimens, i.e. with coated strands and with uncoated strands, are shown on the same graph. The results of the specimens stored dry are shown with solid lines and the

EP 0 308 240 B1

results after an aging period of eight weeks in 60°C water are shown dotted.

The following was observed when comparing the instant formulations with GFRC containing non-coated strands: The maximum load carried by the dry stored specimens is higher for the composites with coated strands; the extent of deflection, a measure of energy absorption by the composite, is considerably higher for the composite with coated strands; the degradation of mechanical properties after aging is very striking for the specimens with uncoated strands, as evidenced by the loss in strength and small deflection sustained at failure; and the composite specimens with coated strands sustained little change in mechanical behavior.

Example 5

Mechanical Properties

The polymeric ingredients used in Example 3 were melt mixed to obtain samples for mechanical properties testing. In addition to the zinc-sulfo-EPDM (ZSE) material used in Example 3 an additional ZSE of a lower sulfonation level (about 10 meq. per 100 grams) was also used.

TABLE I

| INTERPOLYMER COMPLEXES PREPARED BY MELT MIXING | |
|---|---|
| Coating Material | Ratio wt/wt |
| ZSE | -- |
| ZSE-SVP | 90/10 |
| ZSE-SVP | 90/10 |
| ZSE-SVP | 66.6/33.4 |
| ZSE-SVP | 66.6/33.4 |

Melt mixing was conducted in a 60 ml Brabender intensive mixer which was preheated to 150°C. The ZSE to SVP ratio was varied but zinc stearate was added to all the mixes at a level of 4 parts per hundred of rubber (phr) (based on ZSE). The zinc stearate which is an ionic plasticizer is assumed to be incorporated in the ZSE phase. ZSE material described in Example 3 incorporating 4 parts per hundred of zinc stearate is shown in Table II of this Example as ZSE-25 and the second ZSE material with lower sulfonate level and incorporating 4 phr/zinc stearate is shown as ZSE-10.

The melt mixing was carried out at 60-80 rpm and for a period of 10 minutes after all the ingredients were added to the mixer. Samples were compression molded at a thickness of about 0.89 mm (0.035 inches) for stress-strain measurements. Stress-strain was measured on micro-dumbbells at 5.1 mm/minute (2 inches/minute). Hardness measurements were done with Shore A and Shore D hardness testers. Properties measured at room temperature are given in Table II.

This Example shows that mechanical properties can be easily adjusted for an inter-polymer complex by either varying the component ratio or the structure of one or of both components. The possible adjustability of properties is important in optimizing coating properties for a given use.

12

TABLE II

MECHANICAL PROPERTIES OF ZSE/SVP BLENDS

| Material | Ratio wt/wt | Youngs Mod. psi | 100% Mod. psi | Elong. % | Tensile kPa (psi) | | Shore Hardness A | D |
|---|---|---|---|---|---|---|---|---|
| ZSE-25 | 100/0 | 250 | 224 | 660 | 23,036 | (3,341) | 65 | 20 |
| ZSE-25/SVP | 90/10 | 580 | 367 | 603 | 20,471 | (2,969) | 75 | 25 |
| ZSE-25/SVP | 66.3/33.4 | 5,200 | 1,170 | 512 | 25,594 | (3,712) | 91 | 40 |
| ZSE-10/SVP | 66.3/33.4 | 1,180 | 429 | 319 | 4,047 | (587) | 76 | 24 |
| ZSE-25/SVP | 50/50 | 26,000 | 2,112 | 405 | 28,132 | (4,080) | 96 | 57 |

CONCLUSIONS

Example 3 shows that the coating process and compositions of the instant invention can provide thin defect free coatings which do not impregnate the spaces between the fibers of the strand. Example 4

13

demonstrates the advantages of the instant GFRC composite composition in mechanical properties and aging behavior.

**Claims**

1. A composite comprising:
   (a) a plurality of glass fibers; and
   (b) a polymeric coating adhered at least partially to the outer layer of glass filaments arranged in bundles, said coating having a thickness of 0.1 to 100 micrometers; the polymeric coating comprising an interpolymeric complex of a neutralized sulfonated polymer having a sulfonate content of 4 to 200 milliequivalents per 100 grams of the neutralized sulfonated polymer and a nitrogen-containing polymer containing basic groups selected from pyridines, anilines, pyrroles, amides and other basic polymerizable ammonia derivatives, and having a basic nitrogen content of from 4 to 500 milliequivalents per 100g of the nitrogen-containing polymer.

2. A composite according to claim 1, wherein the counterion of the neutralized sulfonated polymer is a metal selected from the group of transition elements.

3. A composite according to claim 1 or claim 2, wherein the neutralized polymer is an elastomeric polymer, preferably selected from EPDM terpolymer or Butyl rubber.

4. A composite according to any preceding claim, wherein the nitrogen-containing polymer is a copolymer of styrene/vinylpyridine.

5. A cement composition comprising:
   (a) a plurality of glass fibers; and
   (b) a polymeric coating adhered at least partially to the outer layer of glass filaments arranged in bundles, said coating having a thickness of 0.1 to 100 micrometers; said polymeric coating comprising an interpolymeric complex of a neutralized sulfonated polymer having a sulfonate content of 4 to 200 milliequivalents per 100 grams of the neutralized sulfonated polymer and a nitrogen-containing polymer containing basic groups selected from pyridines, anilines, pyrroles, amides and other basic polymerizable ammonia derivatives, and having a basic nitrogen content of from 4 to 500 milliequivalents per 100g of the nitrogen-containing polymer; and
   (c) a cementitious matrix.

6. A composition according to claim 5 wherein the counterion of the neutralized sulfonated polymer is a metal from the group of transition elements.

7. A composition according to claim 5 or claim 6, wherein the neutralized polymer is an elastomeric polymer, preferably selected from EPDM terpolymer or Butyl rubber.

8. A composition according to any of claims 5 to 7, wherein the nitrogen-containing polymer is a copolymer of styrene/vinylpyridine.

**Revendications**

1. Composite comprenant:
   (a) une pluralité de fibres de verre; et
   (b) un revêtement polymère adhérant au moins partiellement à la couche externe de filaments de verre disposés en faisceaux, ledit revêtement ayant une épaisseur de 0,1 à 100 $\mu$m; le revêtement polymère comprenant un complexe interpolymère d'un polymère sulfoné neutralisé ayant une teneur en sulfonate de 4 à 200 milliéquivalents pour 100 g du polymère sulfoné neutralisé et d'un polymère azoté contenant des groupes basiques choisis parmi des pyridines, anilines, pyrroles, amides et autres dérivés basiques polymérisables d'ammoniac, et ayant une teneur en azote basique allant de 4 à 500 milliéquivalents pour 100 g du polymère azoté.

2. Composite selon la revendication 1, dans lequel l'ion opposé du polymère sulfoné neutralisé est un métal choisi dans le groupe des éléments de transition.

14

EP 0 308 240 B1

**3.** Composite selon la revendication 1 ou 2, dans lequel le polymère neutralisé est un polymère élastomère, choisi de préférence parmi un terpolymère EPDM (éthylène-propylène-diène) et un caoutchouc butyle.

**4.** Composite selon l'une quelconque des revendications précédentes, dans lequel le polymère azoté est un copolymère styrène/vinylpyridine

**5.** Composition de ciment comprenant:
(a) une pluralité de fibres de verre; et
(b) un revêtement polymère adhérant au moins partiellement à la couche externe de filaments de verre disposés en faisceaux, ledit revêtement ayant une épaisseur de 0,1 à 100 $\mu$m; ledit revêtement polymère comprenant un complexe interpolymère d'un polymère sulfoné neutralisé ayant une teneur en sulfonate de 4 à 200 milliéquivalents pour 100 g du polymère sulfoné neutralisé et d'un polymère azoté contenant des groupes basiques choisis parmi des pyridines, anilines, pyrroles, amides et autres dérivés basiques polymérisables d'ammoniac, et ayant une teneur en azote basique allant de 4 à 500 milliéquivalents pour 100 g du polymère azoté; et
(c) un matériau de base de ciment.

**6.** Composition selon la revendication 5, dans laquelle l'ion opposé du polymère sulfoné neutralisé est un métal choisi dans le groupe des éléments de transition.

**7.** Composition selon la revendication 5 ou 6, dans laquelle la polymère neutralisé est un polymère élastomère, choisi de préférence parmi un terpolymère EPDM (éthylène-propylène-diène) et un caoutchouc butyle.

**8.** Composition selon l'une quelconque des revendications 5 à 7, dans laquelle le polymère azoté est un copolymère styrène/vinylpyridine.

**Patentansprüche**

**1.** Verbundwerkstoff, der:
(a) eine Vielzahl von Glasfasern und
(b) eine mindestens teilweise an der äußeren Schicht von in Bündeln angeordneten Glasfasern haftende polymere Beschichtung mit einer Dicke von 0,1 bis 100 $\mu$m umfaßt, wobei die polymere Beschichtung einen interpolymeren Komplex aus einem neutralisierten, sulfonierten Polymer mit einem Sulfonatgehalt von 4 bis 200 Milliäquivalenten pro 100 g des neutralisierten, sulfonierten Polymers und einem Stickstoff enthaltenden Polymer mit basischen Gruppen ausgewählt aus Pyridinen, Anilinen, Pyrrolen, Amiden und anderen basischen, polymerisierbaren Ammoniakderivaten und einem Gehalt an basischem Stickstoff von 4 bis 500 Milliäquivalenten pro 100 g des Stickstoff enthaltenden Polymers umfaßt.

**2.** Verbundwerkstoff nach Anspruch 1, bei dem das Gegenion des neutralisierten, sulfonierten Polymers ein Metall ausgewählt aus der Gruppe der Übergangselemente ist.

**3.** Verbundwerkstoff nach Anspruch 1 oder Anspruch 2, bei dem das neutralisierte Polymer ein elastomeres Polymer, vorzugsweise ausgewählt aus EPDM-Terpolymer oder Butylkautschuk ist.

**4.** Verbundwerkstoff nach einem der vorhergehenden Ansprüche, bei dem das Stickstoff enthaltende Polymer ein Copolymer von Styrol/Vinylpyridin ist.

**5.** Zementzusammensetzung, die:
(a) eine Vielzahl von Glasfasern und
(b) eine mindestens teilweise an der äußeren Schicht von in Bündeln angeordneten Glasfasern haftende polymere Beschichtung mit einer Dicke von 0,1 bis 100 $\mu$m, wobei die polymere Beschichtung einen interpolymeren Komplex aus einem neutralisierten, sulfonierten Polymer mit einem Sulfonatgehalt von 4 bis 200 Milliäquivalenten pro 100 g des neutralisierten, sulfonierten Polymers und einem Stickstoff enthaltenden Polymer mit basischen Gruppen ausgewählt aus Pyridinen, Anilinen, Pyrrolen, Amiden und anderen basischen, polymerisierbaren Ammoniakderivaten

15

und einem Gehalt an basischem Stickstoff von 4 bis 500 Milliäquivalenten pro 100 g des Stickstoff enthaltenden Polymers umfaßt, und
(c) eine zementartige Matrix umfaßt.

6. Zusammensetzung nach Anspruch 5, bei der das Gegenion des neutralisierten, sulfonierten Polymers ein Metall aus der Gruppe der Übergangselemente ist.

7. Zusammensetzung nach Anspruch 5 oder Anspruch 6, bei der das neutralisierte Polymer ein elastomeres Polymer, vorzugsweise ausgewählt aus EPDM-Terpolymer oder Butylkautschuk ist.

8. Zusammensetzung nach einem der Ansprüche 5 bis 7, bei der das Stickstoff enthaltende Polymer ein Copolymer von Styrol/Vinylpyridin ist.

FIG. I(a)

COATED GLASS
FIBER STRAND

ENLARGEMENT

ENCAPSULANT

GLASS FIBER

FIG. I(b)

DRYING FAN
(HEAT AND AIR)

COOLING

TAKE UP SPOOL

STOCK STRAND

GLASS FIBER STRAND

SOLVENT RICH ENVIRONMENT
POLYMER SOLUTION

FIG. 2

FIG. 3(a)

FIG. 3(b)